# EUROPEAN PATENT SPECIFICATION

(11) **EP 4 086 140 B1**
(45) Date of publication and mention of the grant of the patent: **24.12.2025**
(21) Application number: 21171863.0
(22) Date of filing: 03.05.2021
(51) Int. Cl.: B62D 13/06, B62D 15/02, G05D 1/00

(54) **A METHOD FOR GENERATING A ROUTING MAP OF AN AREA TO BE USED FOR GUIDING A VEHICLE IN THE AREA**
VERFAHREN ZUR ERZEUGUNG EINER ROUTENKARTE EINES GEBIETS ZUR VERWENDUNG ZUR FÜHRUNG EINES FAHRZEUGS IN DEM GEBIET
PROCÉDÉ DE GÉNÉRATION D'UNE CARTE DE ROUTAGE D'UNE ZONE SERVANT À GUIDER UN VÉHICULE DANS LA ZONE

(43) Date of publication of application: 09.11.2022
(73) Proprietor: VOLVO TRUCK CORPORATION, 405 08 Göteborg (SE)
(72) Inventor: PERSSON, Daniel, 413 21 Göteborg (SE)
(74) Representative: Kransell & Wennborg KB

(56) References cited:
- EP-A1- 3 284 650
- WO-A1-2018/131322
- CN-A- 109 131 318
- CN-A- 111 325 366
- US-A1- 2017 276 502

## Description

### TECHNICAL FIELD

The invention relates to a method for generating a routing map of an area to be used for guiding a vehicle in the area. The invention also relates to a method for guiding a vehicle in an area, to a control unit and to a vehicle.

The invention can be applied in heavy-duty vehicles, such as trucks, buses and construction equipment. Although the invention will be described with respect to a heavy-duty truck, the invention is not restricted to this particular vehicle, but may also be used in other vehicles, such as passenger cars.

### BACKGROUND

It is known to use advanced driver assistance systems (ADAS) for different types of vehicles, such as for trucks, buses and construction equipment. ADAS may be used to assist drivers in driving and parking manoeuvres.

Heavy-duty vehicles, and in particular heavy-duty vehicle combinations having at least one articulation joint, may be very difficult to manoeuvre in narrow areas, such as in terminal areas and harbour areas. For example, reversing of a heavy-duty truck and trailer combination, such as a truck and semi-trailer combination and a so-called Nordic combination, is often a challenging task for the driver. Therefore, the driver needs to be very experienced to be able to perform such a driving manoeuvre in a fast and safe manner.

Even though it is known to equip vehicles with ADAS to support drivers in more challenging driving situations, there is still a strive to develop further improved technology for supporting guiding of vehicles in certain areas. In particular, there is a need to develop more advanced technology for heavy-duty vehicles, especially for different types of truck and trailer combinations.

According to its abstract, CN 111 325 366 A relates to an automatic guided vehicle map breakpoint searching method and device, and the method comprises the steps:
introducing a virtual edge into an original automatic guided vehicle map, and calculating a path in an automatic guided vehicle map containing the virtual edge through employing a path searching method; when the path calculation in the automatic guided vehicle map containing the virtual edge succeeds, carrying out first-class breakpoint search; and when the path calculation in the automatic guided vehicle map containing the virtual edge fails, carrying out second-class breakpoint search.

CN109131318A discloses the features of the preamble of claim 1 and relates to an autonomous parking route coordination method based on topological map. Based on V2X communication, the autonomous parking controller provides a topological map of a parkinglot, the target vacant space and the dynamic road traffic matrix by a parking lot server, plans a global path and a parking path, and forms a smooth and complete autonomous parking path through fusion and coordination.

### SUMMARY

An object of the invention is to provide an improved method to be used for guiding a vehicle in an area, which method results in improved guiding efficiency in the area in a cost-effective manner. A further object of the invention is to provide an improved method for guiding a vehicle in an area. Yet further objects of the invention are to provide an improved control unit, an improved vehicle and a computer program and/or a computer readable medium.

According to a first aspect of the invention, the object is achieved by a method according to claim 1. According to a second aspect, the object is achieved by a method according to claim 11. According to a third aspect, the object is achieved by a control unit according to claim 13. According to a fourth aspect, the object is achieved by a vehicle according to claim 14.

According to the first aspect of the invention, the object is achieved by a method for generating a routing map of an area to be used for guiding a vehicle in the area, the method comprising:
- obtaining a real-world map of the area, which map comprises a driving network forming a graph with actual locations of the area, which actual locations are connected by driving segments along which the vehicle is intended to be guided, wherein at least one of the actual locations is a start location for the vehicle and at least one of the actual locations is a target destination for the vehicle;
- generating the routing map by:
   - providing guiding instructions for the vehicle for each driving segment, wherein guiding instructions for at least one driving segment comprise forward guiding instruction for guiding the vehicle in a forward direction of the vehicle along the driving segment, and wherein guiding instructions for at least another driving segment comprise reverse guiding instructions for guiding the vehicle in a reverse direction of the vehicle along the driving segment.

By the provision of a method according to the first aspect, improved and more efficient guiding of a vehicle in an area is achieved. The method is based on a realization to use a real-world map of an area which comprises a driving network, wherein a vehicle can be guided along the driving segments of the driving network. As such, the driving network with the driving segments and the actual locations may for example be formed in advance, and/or formed in real-time, and adapted for the specific area. This approach enables to form the driving segments and to locate the actual locations in an optimal manner such that an efficient and safe driving and guiding of the vehicle in the area is obtained. For example, the driving segments may be formed such that specific paths for the vehicle in the area are as short as possible, and/or such that certain sub-areas in the area are avoided, and/or such that the vehicle will not interfere with obstacles during driving and turning, etc. Thereby, an efficient path planning may be achieved by use of the real-world map comprising the driving network. In addition, by generating a routing map as disclosed herein by use of the real-world map, wherein the routing map comprises guiding instructions for the respective driving segments, the vehicle can be efficiently guided along a selected path formed by a plurality of the driving segments from the at least one starting location to the at least one target destination. In addition, the present invention is also based on a realization that it may be desirable to not only provide guiding instructions for guiding the vehicle in a forward direction of the vehicle, but to provide both forward guiding instructions and reverse guiding instructions for the driving network. It has namely been realized that in some situations, and/or at some locations in an area, driving of a vehicle in reverse instead of forward driving may be preferred. For example, some target destinations, such as terminal loading/unloading docks, should preferably be approached by the vehicle reversing the last portion of a path until docking with the terminal loading/unloading dock. As another example, some driving segments may be easier to traverse by reversing instead of driving forwardly. As yet another example, some driving segments may be driven along in either reverse or forward driving depending on the current circumstances. The current circumstances may relate to the path the vehicle is intended to travel, in which direction the vehicle should approach the target destination, the type of vehicle etc. Accordingly, by generating a routing map as disclosed herein, an improved, more efficient and safe guiding of a vehicle is achieved.

*A "real-world map"* as used herein shall be interpreted broadly and may be defined as a map of an area which includes drivable areas and undrivable areas for the vehicle. The real-world map may not necessarily be a visual reproduction of the area, but may rather be in the form of data associated with coordinates of the area. A drivable area may be constituted by e.g. roads and parking areas, and an undrivable area may be constituted by e.g. buildings and other obstacles.

An *"actual location"* of the area means a position in the area. The actual location may for example be defined by specific coordinates in a coordinate system, such as coordinates in a geographic or local coordinate system. The actual location may be defined as a point in the area.

*A "driving segment"* as used herein means a segment of a possible vehicle path along which the vehicle is intended to be guided. As such, a driving segment may for example be defined by a trajectory along which the vehicle is intended to be guided, and/or a driving segment may be defined by a driving lane along which the vehicle is intended to be guided. The driving lane may comprise outer lateral boundaries within which the vehicle is intended to be guided.

*A "routing map"* as used herein may be defined as a set of data to be used for guiding a vehicle in the area, wherein the data comprises guiding instructions for the vehicle which are associated with the driving segments and the actual locations of the real-world map. As such, the routing map should be interpreted broadly, and is preferably adapted to be used by a control unit.

*"Guiding instructions"* for the vehicle mean instructions to guide a vehicle from one position to another position along a driving segment. Accordingly, guiding instructions may be instructions to guide a vehicle from one actual location to another adjacent actual location along an intermediate driving segment. For example, the guiding instructions may be in the form of instructions to a driver how to e.g. steer a vehicle along the respective driving segment. Instructions to e.g. turn to the right or left may for example be provided to the driver via a display, an audio device and/or by haptic feedback. Additionally, or alternatively, the guiding instructions may be instructions for a control unit which is arranged to issue control signals to e.g. a vehicle steering system of a vehicle such that the vehicle is driven along the respective driving segment.

To use a *"driving network"* which forms a graph as disclosed herein is based on a realization to use graph theory for generating the routing map with the guiding instructions. More specifically, the actual locations in the real-world map represent nodes, also denoted as vertices or points, in the graph which are connected by edges, also denoted as links or lines. The driving segments represent the edges in the graph.

Optionally, at least one of the driving segments is preferably provided with forward and reverse guiding instructions for the vehicle. Thereby, for at least one driving segment, it can be chosen whether to drive forward or to reverse along the at least one driving segment. As such, depending on the specific circumstances, the vehicle may be guided along the driving segment by reverse driving or by forward driving, implying increased efficiency and versatility. Still optionally, the forward and reverse guiding instructions may be instructions for guiding the vehicle in the same direction and/or in different directions between two actual locations. As such, according to example embodiments, a driving segment may be associated with one to four different types of guiding instructions.

Optionally, guiding instructions for at least one driving segment may comprise steering instructions for automatically steering the vehicle along the driving segment. This implies increased comfort for a driver, increased efficiency and a safer driving along the driving segment, mitigating the risk of driver guiding errors. Accordingly, as mentioned in the above, the guiding instructions may be instructions for a control unit which is arranged to issue control signals to e.g. a vehicle steering system of a vehicle.

According to the invention, the method further comprises:
- associating the guiding instructions for each driving segment with a weight value for guiding the vehicle along the respective driving segment, wherein the weight values vary at least based on if the guiding instruction are forward or reverse guiding instructions. For example, a weight value for reverse guiding instructions for a driving segment may be higher than a weight value for forward guiding instructions for the same driving segment, implying that reverse driving is more difficult than forward driving along the driving segment. Thereby, by associating weight values which vary at least based on if the guiding instructions are forward or reverse guiding instructions, improved and more efficient guiding can be achieved. Optionally, the weight values may be set so that for driving segments with the same or substantially the same physical length, forward guiding takes precedence over reverse guiding. Thereby, it can be assured that the guiding along the driving segments will be as efficient as possible since forward driving is likely easier than reverse driving. For example, two driving segments with substantially the same physical length may be defined as driving segments with lengths that differ by no more than ± 20 %, ± 10 %, or ± 5 %.

Optionally, the weight value for the guiding instructions for each driving segment may be set based on at least one of a time period required for performing the guiding operation along the driving segment, energy consumption, a vehicle swept area required for performing the guiding operation along the driving segment, type of vehicle which is intended to be guided along the driving segment, risk of failures during the guiding along the driving segment, such as jack-knifing. For example, if setting the weight value for the guiding instructions for a driving segment based on a time period required for performing the guiding operation along the driving segment, a more efficient and faster vehicle guiding from a start position to a target destination can be achieved. Furthermore, by e.g. setting the weight values for guiding instructions for each driving segment based on energy consumption, such as fuel consumption, for performing the guiding along the driving segment, less energy may be consumed while guiding the vehicle from a start position to a target destination. In addition, it has also been realized that especially for larger vehicles, and for vehicle combinations comprising at least one articulation joint, a vehicle swept area required for performing the guiding operation along the driving segment may vary. For example, it is often likely that a vehicle swept area for performing a reverse driving manoeuvre along a driving segment is different, typically larger, compared to a vehicle swept area for performing a forward driving manoeuvre along the same driving segment. Thereby, by setting the weight values based on the vehicle swept areas, a more efficient guiding may be achieved. A vehicle swept area means an area which the vehicle will cover and sweep over while driving along a respective driving segment. For example, a vehicle forward driving swept area for a vehicle combination driving along a driving segment will typically be smaller than a vehicle reverse driving swept area for the same driving segment.

Optionally, the guiding instructions may comprise instructions for guiding a vehicle combination comprising at least one articulation joint. In particular, it has been realized that forward and reverse guiding instructions for a vehicle combination may differ more compared to forward and reverse guiding instructions for a single vehicle without any articulation joint. Thereby, by generating a routing map with forward and reverse guiding instructions for a vehicle combination, more efficient guiding may be achieved.

Optionally, generating the routing map may further comprise: for at least one of the actual locations, providing a turning manoeuvre guiding instruction for turning the vehicle around from forward to reverse movement, and/or vice versa. Thereby, a more versatile guiding of the vehicle may be achieved, since the routing map also comprises at least one turning manoeuvre guiding instruction. For example, it may be desired for a vehicle to approach a target destination by reversing towards the target destination. Accordingly, for at least the last driving segment before reaching the target destination, reversing the vehicle is required. Thereby, by e.g. providing a turning manoeuvre guiding instruction for the actual location preceding the target destination, forward driving may take precedence until the last driving segment is reached. Thereafter, at the actual location preceding the target destination, a turning manoeuvre guiding instruction may be performed such that the vehicle can be turned around and then reversed along the last driving segment until reaching the target destination. As yet another example, a turning manoeuvre guiding instruction may be advantageously associated with any other actual location, and may in some embodiments be provided at specific actual locations where it is suitable for a vehicle to perform a turning manouevre. Such a suitable actual location may for example be an actual location where there is enough room for performing a turning manoeuvre, and/or an actual location where it is considered as safe for performing a turning manoeuvre, e.g. the risk of collision is low.

Optionally, generating the routing map may further comprise:
- associating a first subset of the driving network with a first set of guiding instructions and associating a second subset of the driving network with a second set of guiding instructions, and
- connecting the first and second subsets of the driving network with at least one connecting driving segment along which the vehicle is intended to be guided, wherein the at least one connecting driving segment is only provided with forward guiding instructions.

Thereby, a larger routing map may be generated without unnecessarily increasing the complexity of the map. In particular, up-scaling of the routing map may thereby be facilitated. It has namely been realized that by connecting e.g. two subsets of the driving network with a connecting driving segment which is only provided with forward guiding instructions, a vehicle can be more easily guided from one subset to the other subset of the driving network. More specifically, it is generally easier for a vehicle to drive forward than reversing. Thereby, by only allowing forward driving in the connecting driving segments, a less complex routing map can be generated, implying reduced processing power, more efficient guiding, cost-efficiency etc.

Optionally, the area may be at least one of a terminal area, a work site, a harbour area and a parking area. Still optionally, the vehicle may be at least one of a truck, such as a truck and trailer vehicle combination, a construction equipment vehicle and a bus.

According to the second aspect of the invention, the object is achieved by a method for guiding a vehicle in an area, comprising:
- obtaining information about a target destination for the vehicle in the area;
- obtaining a routing map of the area, which routing map has been generated by a method according to any one of the embodiments of the first aspect of the invention; and
- guiding the vehicle from a start location to the target destination along a path formed by driving segments interconnecting the start location and the target destination, wherein the guiding is performed by use of the guiding instructions for the driving segments.

Thereby, an efficient guiding of the vehicle is achieved, by using the generated routing map of the area for guiding the vehicle from the start location to the target destination. Advantages and effects of the second aspect are also largely analogous to the advantages and effects of the first aspect of the invention. It shall also be noted that all embodiments of the second aspect of the invention are combinable with all embodiments of the first aspect of the invention, and vice versa.

Optionally, the method may further comprise:
- selecting the driving segments to form the path by use of the weight values according to any one of the embodiments comprising weight values according to the first aspect of the invention.

According to the third aspect of the invention, the object is achieved by a control unit configured to perform the steps of the method according to any one of the embodiments of the first aspect of the invention and/or of the method according to any one of the embodiments of the second aspect of the invention.

According to the fourth aspect of the invention, the object is achieved by a vehicle comprising the control unit according to any one of the embodiments of the third aspect of the invention.

According to a further aspect of the invention, the object is also achieved by a computer program comprising program code means for performing the steps of any of the methods according to the first and second aspects when said program is run on a computer, such as on the control unit as disclosed herein.

According to a yet further aspect of the invention, the object is also achieved by a computer readable medium carrying a computer program comprising program code means for performing the steps of any the methods according to the first and second aspects when said program product is run on a computer, such as on the control unit as disclosed herein.

According to a yet further aspect of the invention, the object is also achieved by a routing map which has been generated according to the method of any one of the embodiments of the first aspect of the invention.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a schematic view of a real-world map and a routing map according to an example embodiment of the present invention;
Fig. 2 is a side view of a vehicle according to an example embodiment of the present invention;
Fig. 3 is a schematic view of a real-world map and a routing map according to another example embodiment of the present invention;
Figs. 4a-b are schematic views of parts of a real-world map and a routing map according to example embodiments of the present invention; and
Figs. 5 and 6 are flowcharts of methods according to example embodiments of the invention.

### DETAILED DESCRIPTION OF EXAMPLE EMBODIMENTS OF THE INVENTION

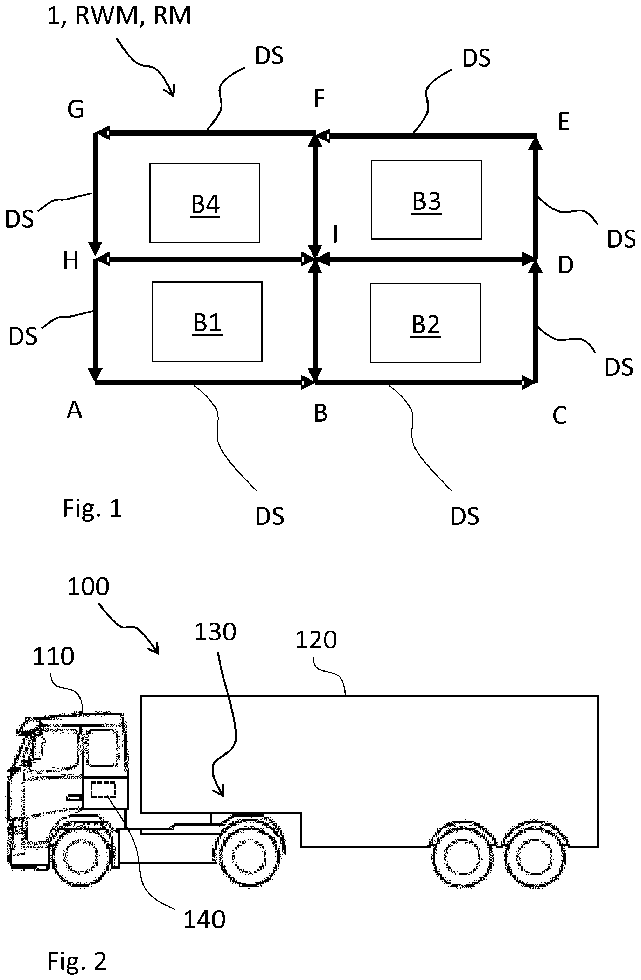

Fig. 1 depicts a schematic view of a real-world map RWM and a routing map RM which has been generated according to a method of an embodiment of the first aspect of the invention. The routing map RM is intended to be used for guiding a vehicle 100 in the area 1, such as the vehicle 100 shown in fig. 2. The vehicle 100 as shown in fig. 2 is a truck 110 and trailer 120 combination. Such a vehicle 100 is generally more difficult to reverse than driving forward, especially since the vehicle combination 100 comprises an articulation joint 130.

The real-world map RWM is a map of an area 1, such as a terminal area or the like, and comprises a driving network forming a graph with actual locations A, B, C, D, E, F, G, H and I of the area 1. The actual locations A,..., I may for example be defined as coordinates in a geographic coordinate system.

The boxes B1, B2, B3 and B4 of the real-world map RWM represent objects, such as buildings, which should be avoided by the vehicle 100 while driving in the area 1. The location of the objects B1, B2, B3 and B4 may also advantageously be defined by coordinates in e.g. a geographic coordinate system. In this regard it shall be noted that the real-world maps RWM and the routing maps RM as shown in the figures are here simplified illustrations and may of course be more complicated depending on the characteristics of the area 1.

The actual locations A,..., I are connected by driving segments DS along which the vehicle 100 is intended to be guided, wherein at least one of the actual locations A,...,I is a start location for the vehicle 100 and at least one of the actual locations A,...,I is a target destination for the vehicle 100. For example, the actual location A may be a start location for the vehicle 100 and the actual location E may be a target destination for the vehicle 100.

According to the method of the first aspect of the invention, the routing map RM is generated by providing guiding instructions for the vehicle 100 for each driving segment DS, wherein guiding instructions for at least one driving segment DS comprise forward guiding instructions for guiding the vehicle 100 in a forward direction of the vehicle 100 along the driving segment DS, and wherein guiding instructions for at least another driving segment DS comprise reverse guiding instructions for guiding the vehicle 100 in a reverse direction of the vehicle along the driving segment DS.

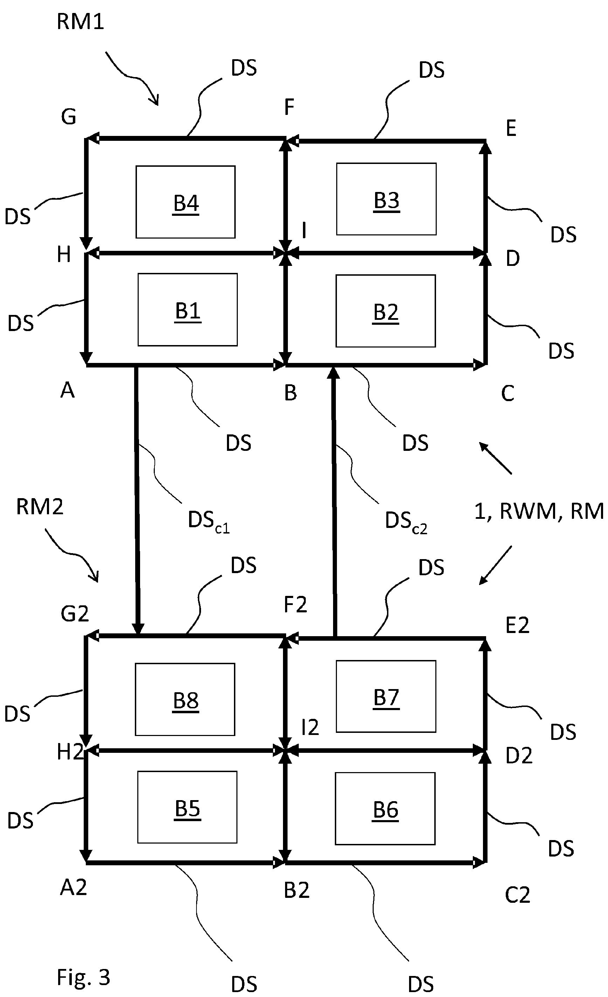

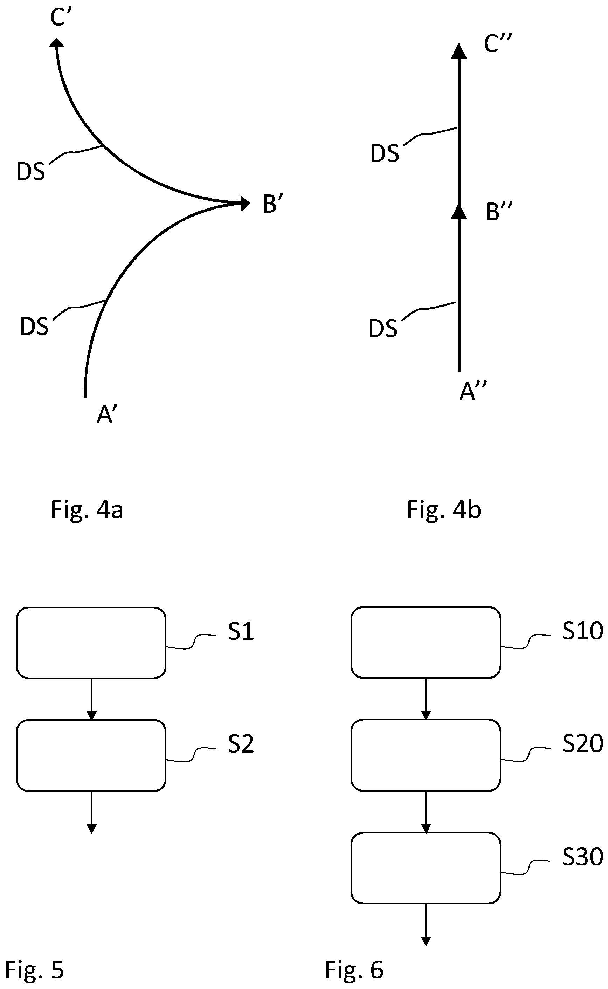

In fig. 1, and also in figs. 3 and 4a-b, the driving segments DS and the associated guiding instructions are represented by arrows, where the direction of the arrow is indicative of the vehicle's 100 driving direction of the guiding instruction. For example, the driving segment DS between the actual locations A and B is associated with guiding instructions for guiding the vehicle 100 in a direction from the actual location A to the actual location B. As yet another example, the driving segment DS between the actual locations B and I is associated with guiding instructions for guiding the vehicle 100 in a direction from the actual location B to the actual location I, and also it is further associated with guiding instructions for guiding the vehicle 100 in the opposite direction from the actual location I to the actual location B. Any of the guiding instructions may be forward guiding instructions or reverse guiding instructions, where guiding instructions for at least one driving segment DS comprise forward guiding instructions and wherein guiding instructions for at least another driving segment DS comprise reverse guiding instructions.

Fig. 5 shows a flowchart of a method according to an example embodiment of the first aspect of the invention. The method comprises:
S1: obtaining a real-world map RWM of the area 1, which map comprises a driving network forming a graph with actual locations A,...,I of the area 1, which actual locations are connected by driving segments DS along which the vehicle 100 is intended to be guided, wherein at least one of the actual locations A,...,I is a start location for the vehicle 100 and at least one of the actual locations A,...,I is a target destination for the vehicle 100;
S2: generating the routing map RM by:
   - providing guiding instructions for the vehicle 100 for each driving segment DS, wherein guiding instructions for at least one driving segment DS comprise forward guiding instructions for guiding the vehicle 100 in a forward direction of the vehicle 100 along the driving segment DS, and wherein guiding instructions for at least another driving segment DS comprise reverse guiding instruction for guiding the vehicle 100 in a reverse direction of the vehicle 100 along the driving segment DS.

At least one of the driving segments DS may be provided with forward and reverse guiding instructions for the vehicle 100. For example, the driving segment DS between A and B in figs. 1 and 3 may be provided with both forward and reverse guiding instructions from A to B, and/or the driving segment DS between B and I may be provided with forward guiding instructions from B to I and with reverse guiding instructions from I to B.

Guiding instructions for at least one driving segment DS may comprise steering instructions for automatically steering the vehicle 100 along the driving segment DS. Still further, the guiding instructions for all driving segments DS may comprise steering instructions for automatically steering the vehicle 100 along the driving segments DS. Additionally, the guiding instructions may also comprise throttle and/or braking instructions, thereby enabling the possibility for fully autonomous driving along the respective driving segments DS.

The method according to the first aspect of the invention may further comprise:
- associating the guiding instructions for each driving segment DS with a weight value for guiding the vehicle 100 along the respective driving segment DS, wherein the weight values vary at least based on if the guiding instructions are forward or reverse guiding instructions. For example, the above-mentioned forward and reverse guiding instructions for the driving segment DS between the actual locations A and B may be weighted such that forward driving guiding takes precedence over reverse driving guiding. However, it shall be noted that on some occasions it may anyway be decided to reverse along the driving segment DS between A and B if for example it is required for the vehicle 100 to approach the actual location B by reversing. For example, the actual location B may be associated with a loading dock (not shown), whereby the vehicle 100 is intended to approach and dock with the loading dock by reversing towards the loading dock.

Furthermore, the weight values may be set so that for driving segments DS with the same or substantially the same physical length, forward guiding takes precedence over reverse guiding. Thereby it can be assured that forward driving is performed more often than reverse driving, implying more efficient driving. For example, if the vehicle is a vehicle combination as e.g. the vehicle 100 shown in fig. 2, more efficient driving of the vehicle 100 in the area 1 can be achieved by the vehicle 100 performing forward driving more often than by reverse driving.

The weight value for the guiding instructions for each driving segment may also be set based on at least one of a time period required for performing the guiding operation along the driving segment DS, energy consumption, a vehicle swept area required for performing the guiding operation along the driving segment DS, type of vehicle 100 which is intended to be guided along the driving segment DS, risk of failures during the guiding along the driving segment DS, such as jack-knifing. Jack-knifing is a condition which can occur for articulated vehicle combinations, such as the vehicle combination 100 in fig. 2. Jack-knifing is the situation when the articulation joint 130 reaches an articulation angle where the truck 110 and the trailer 120 will hit each other. Accordingly, some guiding instructions for some driving segments may be more sensitive for failures, such as when reversing in narrow areas, around corners etc. Thereby, by setting the weight values by taking such risks into consideration, the guiding efficiency can be further improved. The type of vehicle may also affect the weight values. For example, if the vehicle is a vehicle combination with more than one articulation joint (not shown), the risk of failures during guiding along some of the driving segments DS may be higher, especially during reverse driving. Thereby, setting the weight values by also taking the type of vehicle into consideration, the guiding can be further improved.

With respect to fig. 3, generating the routing map RM may further comprise:
- associating a first subset RM1 of the driving network with a first set of guiding instructions and associating a second subset RM2 of the driving network with a second set of guiding instructions, and
- connecting the first and second subsets RM1, RM2 of the driving network with at least one connecting driving segment DS_{c1}, DS_{c2} along which the vehicle 100 is intended to be guided, wherein the at least one connecting driving segment DS_{c1}, DS_{c2} is only provided with forward guiding instructions.

Thereby, a larger routing map RM1, RM2 can be generated without unnecessarily increasing the complexity, as also mentioned in the above. Accordingly, the routing map RM1, RM2 can be up-scaled for a larger area, whereby only forward driving is allowed in the connecting driving segments DS_{c1}, DS_{c2}. As shown in fig. 3, there are two connecting driving segments DS_{c1}, DS_{c2} connecting the two subsets RM1 and RM2 of the driving network. The forward guiding instructions are provided in opposite directions, thereby enabling a vehicle 100 to be guided from the driving network RM1 to the driving network RM2, and vice versa. The driving network RM2 which comprises the actual locations A2,..., I2 is created in a similar manner as the driving network RM1, i.e. with forward and reverse guiding instructions. As can be further seen, obstacles B5, B6, B7 and B8 are associated with the second subset of the driving network RM2. The obstacles B5, B6, B7 and B8 may also for example be buildings. Still further, the two connecting driving segments DS_{c1}, DS_{c2} may be formed by a road section, such as a road section with two lanes, wherein only forward guiding is allowed along the road section.

The areas 1 shown in figs. 1 and 3 may be a terminal area, a work site, a harbour area and a parking area, or any other area in which a vehicle is intended to be guided.

With respect to figs. 4a and 4b, schematic illustrations of two respective connected driving segments DS between actual location A', B' and C' (fig. 4a) and between actual locations A", B" and C" (fig. 4b) are shown. Here it is shown that the driving segments DS may have any shape, such as a straight shape and a curved shape. As an example, the driving segment DS between A' and B' is provided with forward guiding instructions and the driving segment DS between B' and C' is provided with reverse guiding instructions. Accordingly, a vehicle 100 can first be guided by the forward guiding instructions from A' to B', and thereafter be guided by the reverse guiding instructions from B' to C'. The shape and orientation of the driving segments DS is arranged such that the vehicle 100 does not need to perform any turning manoeuvre when changing from forward driving to reverse driving at the actual location B'. More specifically, the driving segments DS are aligned at the actual location B'. As another example, the driving segment DS between A" and B" is associated with forward guiding instructions and the driving segment DS between B" and C" is associated with reverse guiding instructions. Due to the shape and orientation of the driving segments DS between A", B" and C", a turning manoeuvre at B" for the vehicle 100 will be required. Accordingly, the actual location B" is here associated with a turning manoeuvre guiding instruction for turning the vehicle 100 around from forward to reverse movement.

The vehicle 100 as shown in fig. 2 may be guided in the areas 1 as shown in figs. 1 and 3. The vehicle 100 may thereby be guided by a method according to the second aspect of the invention.

With reference to fig. 6, the method according to the second aspect comprises:
S10: obtaining information about a target destination, such as E, for the vehicle 100 in the area 1;
S20: obtaining a routing map RM of the area 1, which routing map has been generated by a method according to any one of the embodiments of the first aspect of the invention; and
S30: guiding the vehicle 100 from a start location, such as A, to the target destination E along a path formed by driving segments DS interconnecting the start location A and the target destination E, wherein the guiding is performed by use of the guiding instructions for the driving segments DS.

The guiding instructions are preferably associated with coordinates along the respective driving segments DS, and the vehicle 100 may be equipped with a Global Navigation and Satellite System (GNSS) sensor for determining the actual position of the vehicle 100 in the area 1. Thereby, specific guiding instructions associated with specific coordinates along a driving segment DS can be used by the vehicle 100 when it is determined that the vehicle 100 is positioned at a specific coordinate along the driving segment DS. The vehicle 100 may also be provided with other sensors for the guiding, such as cameras, light detection and ranging (LIDAR) sensors, radio detection and ranging (RADAR) sensors, sound navigation and ranging (SONAR) sensors, ultrasonic sensors, sensors for determining an actual orientation of the vehicle 100 etc. Thereby, even further improved guiding can be achieved, taking also other circumstances into consideration. For example, a camera (not shown), or any other environment perception sensor, may identify obstacles along the path which should be avoided, such as vulnerable road users (VRU), other vehicles etc. As such, according to an example embodiment, the vehicle 100 may in certain circumstances use other guiding instructions, based on e.g. information from the environment perception sensor, instead of the guiding instructions obtained from the routing map RM. For example, the other guiding instructions may be used when an obstacle is identified by the environment perception sensor, or when an operator indicates that other guiding instructions should be used. According to a yet further embodiment, an operator, such as a driver, may be able to override the guiding instructions associated with the routing map RM and manually control the vehicle 100 instead. Thereby, further improved safety is achieved.

The guiding instructions associated with the routing map RM are preferably guiding instructions for automatically steering the vehicle along the respective driving segments DS. Typically, the guiding instructions are in the form of control signals provided to a vehicle steering system (not shown) of the vehicle 100. The guiding instructions may also be instructions for controlling vehicle speed, such as throttle control and braking control.

The path from A to E formed by driving segments DS therebetween may be selected by use of any one of the aforementioned weight values. Thereby, an efficient, fast and safe path for the vehicle 100 may be found. For example, it may be selected to drive and guide the vehicle 100 from A to E by driving in consecutive order from A to B, from B to I, from I to D and from D to E. Alternatively, depending on the weight values, it may instead be selected to drive and guide the vehicle 100 in consecutive order from A to B, from B to C, from C to D and from D to E.

The present invention also relates to a control unit 140 configured to perform the steps of the method according to any one of the embodiments of the first aspect of the invention and/or of the method according to any one of the embodiments of the second aspect of the invention. In the embodiment shown in fig. 2, the control unit 140 is part of the vehicle 100. More specifically, the control unit 140 is integrated in the truck 110. It shall however be noted that the control unit 140 does not necessarily need to be part of the vehicle 100, but may also be a remote control unit not part of the vehicle 100, whereby the remote control unit is arranged to communicate with the vehicle 100, e.g. by wireless communication means. For example, the method for generating the routing map may in an alternative embodiment be performed by a remote control unit which is e.g. associated with the area 1, such as associated with a terminal area. The method for guiding the vehicle 100 is however preferably performed by a vehicle on-board control unit 140, even though also this method may at least partly be performed by a remote control unit.

The control unit 140 is an electronic control unit and may comprise processing circuitry, one or more memories for storing e.g. the generated routing map RM. The control unit 140 may be adapted to run a computer program as disclosed herein. The control unit 140 may comprise hardware and/or software for performing the methods as disclosed herein. The control unit 140 may be embodied as one device, or it may be constituted by two or more sub-control units which are communicatively connected to each other. The control unit 140 is also preferably communicatively connected to the aforementioned vehicle steering system such that it can issue control signals to the vehicle control system, and/or to any other vehicle system, such as to a throttle control system and a brake control system.

It is to be understood that the present invention is not limited to the embodiments described above and illustrated in the drawings; rather, the skilled person will recognize that many changes and modifications may be made within the scope of the appended claims.

## Claims

1. A method for generating a routing map (RM) of an area (1) to be used for guiding a vehicle (100) in the area (1), the method comprising:
- obtaining (S1) a real-world map (RWM) of the area (1), which map comprises a driving network forming a graph with actual locations (A,... ,I) of the area (1), which actual locations are connected by driving segments (DS) along which the vehicle (100) is intended to be guided, wherein at least one of the actual locations (A,...,I) is a start location for the vehicle (100) and at least one of the actual locations (A,...,I) is a target destination for the vehicle (100);
- generating (S2) the routing map (RM) by:
- providing guiding instructions for the vehicle (100) for each driving segment (DS), wherein guiding instructions for at least one driving segment (DS) comprise forward guiding instructions for guiding the vehicle (100) in a forward direction of the vehicle (100) along the driving segment (DS), and wherein guiding instructions for at least another driving segment (DS) comprise reverse guiding instructions for guiding the vehicle (100) in a reverse direction of the vehicle along the driving segment (DS), **characterized in that** the method further comprises:
- associating the guiding instructions for each driving segment (DS) with a weight value for guiding the vehicle (100) along the respective driving segment (DS), wherein the weight values vary at least based on if the guiding instructions are forward or reverse guiding instructions.

2. The method according to claim 1, wherein at least one of the driving segments (DS) is provided with forward and reverse guiding instructions for the vehicle (100).

3. The method according to any one of the preceding claims, wherein guiding instructions for at least one driving segment (DS) comprise steering instructions for automatically steering the vehicle (100) along the driving segment (DS).

4. The method according to any one of the preceding claims, wherein the weight values are set so that for driving segments (DS) with the same or substantially the same physical length, forward guiding takes precedence over reverse guiding.

5. The method according to any one of the preceding claims, wherein the weight value for the guiding instructions for each driving segment is set based on at least one of a time period required for performing the guiding operation along the driving segment (DS), energy consumption, a vehicle swept area required for performing the guiding operation along the driving segment (DS), type of vehicle (100) which is intended to be guided along the driving segment (DS), risk of failures during the guiding along the driving segment (DS), such as jack-knifing.

6. The method according to any one of the preceding claims, wherein the guiding instructions comprise instructions for guiding a vehicle combination (100) comprising at least one articulation joint.

7. The method according to any one of the preceding claims, wherein generating the routing map (RM) further comprises: for at least one of the actual locations (A,...,I), providing a turning manoeuvre guiding instruction for turning the vehicle (100) around from forward to reverse movement, and/or vice versa.

8. The method according to any one of the preceding claims, wherein generating the routing map (RM) further comprises:
- associating a first subset (RM1) of the driving network with a first set of guiding instructions and associating a second subset (RM2) of the driving network with a second set of guiding instructions, and
- connecting the first and second subsets (RM1, RM2) of the driving network with at least one connecting driving segment (DS_{c1}, DS_{c2}) along which the vehicle (100) is intended to be guided, wherein the at least one connecting driving segment is only provided with forward guiding instructions.

9. The method according to any one of the preceding claims, wherein the area (1) is at least one of a terminal area, a work site, a harbour area and a parking area.

10. The method according to any one of the preceding claims, wherein the vehicle (100) is at least one of a truck, such as a truck and trailer vehicle combination, a construction equipment vehicle and a bus.

11. A method for guiding a vehicle (100) in an area (1), comprising:
- obtaining (S10) information about a target destination (E) for the vehicle (100) in the area (1);
- obtaining (S20) a routing map (RM) of the area (1), which routing map has been generated by a method according to any one of the preceding claims; and
- guiding (S30) the vehicle (100) from a start location (A) to the target destination (E) along a path formed by driving segments (DS) interconnecting the start location (A) and the target destination (E), wherein the guiding is performed by use of the guiding instructions for the driving segments (DS).

12. The method according to claim 11, further comprising:
- selecting the driving segments (DS) to form the path by use of the weight values according to any one of claims 4-5.

13. A control unit (140) configured to perform the steps of the method according to any one of claims 1-10 and/or of the method according to any one of claims 11-12.

14. A vehicle (100) comprising the control unit (140) according to claim 13.

## Patentansprüche

1. Verfahren zur Erzeugung einer Routenkarte (RM) eines Gebiets (1), zur Verwendung zur Führung eines Fahrzeuges (100) in dem Gebiet (1), das Verfahren umfassend:
- Erhalten (S1) einer realen Karte (RWM) des Gebiets (1), wobei die Karte ein Fahrnetzwerk umfasst, das ein Diagramm mit tatsächlichen Orten (A,...,I) des Gebiets (1) bildet, wobei die tatsächlichen Orte durch Fahrsegmente (DS) verbunden sind, entlang derer das Fahrzeug (100) geführt werden soll, wobei mindestens einer der tatsächlichen Orte (A,...,I) ein Startort für das Fahrzeug (100) ist und mindestens einer der tatsächlichen Orte (A,...,I) ein Zielort für das Fahrzeug (100) ist;
- Erzeugen (S2) der Routenkarte (RM) durch:
- Bereitstellen von Führungsanweisungen für das Fahrzeug (100) für jedes Fahrsegment (DS), wobei Führungsanweisungen für mindestens ein Fahrsegment (DS) Vorwärtsführungsanweisungen zum Führen des Fahrzeugs (100) in einer Vorwärtsrichtung des Fahrzeugs (100) entlang des Fahrsegments (DS) umfassen, und wobei Führungsanweisungen für mindestens ein anderes Fahrsegment (DS) Rückwärtsführungsanweisungen zum Führen des Fahrzeugs (100) in einer Rückwärtsrichtung des Fahrzeugs entlang des Fahrsegments (DS) umfassen, **dadurch gekennzeichnet, dass** das Verfahren ferner umfasst:
- Zuordnen der Führungsanweisungen für jedes Fahrsegment (DS) mit einem Gewichtswert zum Führen des Fahrzeugs (100) entlang des jeweiligen Fahrsegments (DS), wobei die Gewichtswerte zumindest auf der Grundlage davon variieren, ob die Führungsanweisungen Vorwärts- oder Rückwärtsführungsanweisungen sind.

2. Verfahren nach Anspruch 1, wobei mindestens eines der Fahrsegmente (DS) mit Vorwärts- und Rückwärtsführungsanweisungen für das Fahrzeug (100) versehen ist.

3. Verfahren nach einem der vorhergehenden Ansprüche, wobei die Führungsanweisungen für mindestens ein Fahrsegment (DS) Lenkanweisungen zum automatischen Lenken des Fahrzeugs (100) entlang des Fahrsegments (DS) umfassen.

4. Verfahren nach einem der vorhergehenden Ansprüche, wobei die Gewichtswerte so eingestellt werden, dass für Fahrsegmente (DS) mit gleicher oder im Wesentlichen gleicher physischer Länge die Vorwärtsführung Vorrang vor der Rückwärtsführung hat.

5. Verfahren nach einem der vorhergehenden Ansprüche, wobei der Gewichtswert für die Führungsanweisungen für jedes Fahrsegment basierend auf mindestens einem der folgenden Faktoren festgelegt wird: Zeitraum, der für die Durchführung des Führungsvorgangs entlang des Fahrsegments (DS) erforderlich ist, Energieverbrauch, Fahrzeugbereich, der für die Durchführung des Führungsvorgangs entlang des Fahrsegments (DS) erforderlich ist, Art des Fahrzeugs (100), das entlang des Fahrsegments (DS) geführt werden soll, Risiko von Fehlern während der Führung entlang des Fahrsegments (DS), wie z.B. Ausbrechen.

6. Verfahren nach einem der vorhergehenden Ansprüche, wobei die Führungsanweisungen Anweisungen zum Führen einer Fahrzeugkombination (100) mit mindestens einer Gelenkverbindung umfassen.

7. Verfahren nach einem der vorhergehenden Ansprüche, wobei das Erzeugen der Routenkarte (RM) ferner umfasst: für mindestens einen der tatsächlichen Orte (A, ..., I) eine Führungsanweisung für ein Wendemanöver bereitzustellen, um das Fahrzeug (100) von der Vorwärts- in die Rückwärtsbewegung und/oder umgekehrt zu wenden.

8. Verfahren nach einem der vorhergehenden Ansprüche, wobei das Erzeugen der Routenkarte (RM) ferner umfasst:
- Zuordnen einer ersten Untergruppe (RM1) des Fahrnetzwerks zu einem ersten Satz von Führungsanweisungen und Zuordnen einer zweiten Untergruppe (RM2) des Fahrnetzwerks zu einem zweiten Satz von Führungsanweisungen, und
- Verbinden der ersten und zweiten Untergruppe (RM1, RM2) des Fahrnetzwerks mit mindestens einem Verbindungsfahrsegment (DS_{c1}, DS_{c2}), entlang dessen das Fahrzeug (100) geführt werden soll, wobei das mindestens eine Verbindungsfahrsegment nur mit Vorwärtsführungsanweisungen versehen ist.

9. Verfahren nach einem der vorhergehenden Ansprüche, wobei das Gebiet (1) mindestens eines der folgenden ist: ein Terminalbereich, eine Baustelle, ein Hafenbereich oder ein Parkbereich.

10. Verfahren nach einem der vorhergehenden Ansprüche, wobei das Fahrzeug (100) mindestens eines der folgenden ist: ein LKW, beispielsweise eine Kombination aus LKW und Anhängerfahrzeug, ein Baumaschinenfahrzeug oder ein Bus.

11. Verfahren zur Führung eines Fahrzeugs (100) in einem Gebiet (1), umfassend:
- Erhalten (S10) von Informationen über einen Zielort (E) für das Fahrzeug (100) in dem Gebiet (1);
- Erhalten (S20) einer Routenkarte (RM) des Gebiets (1), wobei die Routenkarte durch ein Verfahren nach einem der vorhergehenden Ansprüche erzeugt wurde; und
- Führen (S30) des Fahrzeugs (100) von einem Startort (A) zu dem Zielort (E) entlang eines Weges, der durch Fahrsegmente (DS) gebildet wird, die den Startort (A) und den Zielort (E) miteinander verbinden, wobei das Führen unter Verwendung der Führungsanweisungen für die Fahrsegmente (DS) durchgeführt wird.

12. Verfahren nach Anspruch 11, ferner umfassend:
- Auswahl der Fahrsegmente (DS) zur Bildung des Weges unter Verwendung der Gewichtswerte D nach einem der Ansprüche 4-5.

13. Steuereinheit (140), die konfiguriert ist, um die Schritte des Verfahrens nach einem der Ansprüche 1-10 und/oder des Verfahrens nach einem der Ansprüche 11-12 durchzuführen.

14. Fahrzeug (100), das die Steuereinheit (140) nach Anspruch 13 umfasst.

## Revendications

1. Procédé de génération d'une carte de routage (RM) d'une zone (1) destinée à être utilisée pour guider un véhicule (100) dans la zone (1), le procédé comprenant :
- l'obtention (S1) d'une carte de monde réel (RWM) de la zone (1), laquelle carte comprend un réseau de conduite formant un graphique avec des emplacements réels (A,...,I) de la zone (1), lesquels emplacements réels sont reliés par des segments de conduite (DS) le long desquels le véhicule (100) est destiné à être guidé, au moins un des emplacements réels (A,...,I) étant un emplacement de départ pour le véhicule (100) et au moins un des emplacements réels (A,...,I) étant une destination cible pour le véhicule (100) ;
- la génération(S2) de la carte de routage (RM) par :
- la fourniture d'instructions de guidage pour le véhicule (100) pour au moins un segment de conduite (DS), les instructions de guidage pour au moins un segment de conduite (DS) comprenant des instructions de guidage avant pour guider le véhicule (100) dans une direction vers l'avant du véhicule (100) le long du segment de conduite (DS), et les instructions de guidage pour au moins un autre segment de conduite (DS) comprenant des instructions de guidage arrière pour guider le véhicule (100) dans une direction arrière du véhicule le long du segment de conduite (DS), **caractérisé en ce que** le procédé comprend en outre :
- l'association des instructions de guidage pour chaque segment de conduite (DS) à une valeur de poids pour guider le véhicule (100) le long du segment de conduite respectif (DS),
les valeurs de poids variant au moins en fonction du fait que les instructions de guidage sont des instructions de guidage avant ou arrière.

2. Procédé selon la revendication 1, dans lequel au moins un des segments de conduite (DS) est pourvu d'instructions de guidage avant et arrière pour le véhicule (100).

3. Procédé selon l'une quelconque des revendications précédentes, dans lequel des instructions de guidage pour au moins un segment de conduite (DS) comprennent des instructions de guidage pour diriger automatiquement le véhicule (100) le long du segment de conduite (DS).

4. Procédé selon l'une quelconque des revendications précédentes, dans lequel les valeurs de poids sont réglées de telle sorte que, pour des segments de conduite (DS) ayant la même longueur physique ou sensiblement la même longueur physique, le guidage avant soit prioritaire sur le guidage arrière.

5. Procédé selon l'une quelconque des revendications précédentes, dans lequel la valeur de poids pour les instructions de guidage pour chaque segment de conduite est établie sur la base d'au moins un intervalle de temps requis pour effectuer l'opération de guidage le long du segment de conduite (DS), une consommation d'énergie, une zone balayée par le véhicule requise pour effectuer l'opération de guidage le long du segment de conduite (DS), le type de véhicule (100) destiné à être guidé le long du segment d'entraînement (DS), le risque de défaillances lors du guidage le long du segment de conduite (DS), telles que la mise en portefeuille.

6. Procédé selon l'une quelconque des revendications précédentes, dans lequel les instructions de guidage comprennent des instructions pour guider une combinaison de véhicules (100) comprenant au moins une articulation.

7. Procédé selon l'une quelconque des revendications précédentes, dans lequel la génération de la carte de routage (RM) comprend en outre : pour au moins l'un des emplacements réels (A,...,I), la fourniture d'une instruction de guidage de manœuvre de virage pour faire passer le véhicule (100) de la marche avant à la marche arrière, et/ou vice versa.

8. Procédé selon l'une quelconque des revendications précédentes, dans lequel la génération de la carte de routage (RM) comprend en outre :
- l'association d'un premier sous-ensemble (RM1) du réseau de conduite à un premier ensemble d'instructions de guidage et l'association d'un second sous-ensemble (RM2) du réseau de conduite à un second ensemble d'instructions de guidage, et
- la connexion des premier et second sous-ensembles (RM1, RM2) du réseau de conduite avec au moins un segment de conduite de liaison (DS_{c1}, DS_{c2}) le long duquel le véhicule (100) doit être guidé, l'au moins un segment de conduite de liaison ne comportant que des instructions de guidage avant.

9. Procédé selon l'une quelconque des revendications précédentes, dans lequel la zone (1) est au moins l'une d'une zone terminale, d'un chantier, d'une zone portuaire et d'une zone de stationnement.

10. Procédé selon l'une quelconque des revendications précédentes, dans lequel le véhicule (100) est au moins l'un d'un camion, tel qu'une combinaison de camion et remorque, un véhicule d'équipement de construction et un bus.

11. Procédé de guidage d'un véhicule (100) dans une zone (1), comprenant :
- l'obtention (S10) d'informations sur une destination cible (E) pour le véhicule (100) dans la zone (1) ;
- l'obtention (S20) d'une carte de routage (RM) de la zone (1), laquelle carte de routage a été générée par un procédé selon l'une quelconque des revendications précédentes ; et
- le guidage (S30) du véhicule (100) d'un point de départ (A) à la destination cible (E) le long d'une trajectoire formée par des segments de conduite (DS) reliant l'emplacement de départ (A) et la destination cible (E), le guidage étant effectué au moyen des instructions de guidage pour les segments de conduite (DS).

12. Procédé selon la revendication 11, comprenant en outre :
- la sélection des segments de conduite (DS) pour former le trajet en utilisant les valeurs de poids selon l'une quelconque des revendications 4 et 5.

13. Unité de commande (140) configurée pour exécuter les étapes du procédé selon l'une quelconque des revendications 1 à 10 et/ou du procédé selon l'une quelconque des revendications 11 à 12.

14. Véhicule (100) comprenant l'unité de commande (140) selon la revendication 13.
